# EUROPEAN PATENT SPECIFICATION

(11) **EP 2 735 763 B1**
(45) Date of publication and mention of the grant of the patent: **09.08.2017**
(21) Application number: 12194090.2
(22) Date of filing: 23.11.2012
(51) Int. Cl.: F16F 15/32

(54) **Balancing weights**
Auswuchtgewichte
Poids d'équilibrage

(43) Date of publication of application: 28.05.2014
(73) Proprietor: WEGMANN automotive GmbH & Co. KG, 97209 Veitshöchheim (DE)
(72) Inventor: Bode, Felix, 97209 Veitshöchheim (DE); Hornung, Thomas, 97072 Würzburg (DE)
(74) Representative: Lohr, Georg

(56) References cited:
- EP-A1- 1 302 695
- WO-A2-2007/114690
- DE-A1- 2 411 077
- GB-A- 2 442 715
- US-A- 4 728 154

## Description

### Field of the invention

The invention relates to balancing weights, which may be attached to the rim of a wheel.

### Description of the related art

Clip-on balancing weights as disclosed in the US patent 4,728,154 have a body of a metal providing mass and a clip to hold the balancing weight to the rim of a wheel. Previously the bodies of balancing weights have been made from heavy metals like lead or iron. While lead has been prohibited in most states, iron is still in use. Iron weights have the disadvantage that they must be protected from corrosion. With modern cars, the maximum speeds increase. This requires more precise and more granular balancing of the wheels. Common lead or iron balancing weights get too small with low weight sizes to be handled easy and specifically to be automatically handled by robots.

In GB 2 442 715 A a wheel balance assembly is disclosed. A clip is held in a U-shaped groove of a balancing weight.

### Summary of the invention

The embodiments are based on the object of providing a Balancing weight, which is lightweight and has a size big enough to be handled by an automatic handling system or robot.

In an embodiment, the balancing weight has a body made of a plastic material. A clip may be provided for attaching the weight to a rim of a wheel. Preferably, the clip is at least partially enclosed within the body. It may be molded partially into the body. The clip may be of a metal like iron or steel or any other suitable material. The plastic material may be at least one of the groups of Polyethylene, Polypropylene, Polyamide, Polycarbonate, ABS, Polytetrafluorethylene or any other suitable plastic material. As the plastic material provides a lower density compared to lead, iron, or other high mass materials, the balancing weight may be made larger, so that it can easily be handled. There is no high mass filler or other component like a high mass rod having a significantly higher specific weight than the plastic material within the body, which would increase mass. As the clip preferably is of a thin sheet material, it does not significantly increase the overall mass. Furthermore, a plastic material has significant better corrosion characteristics and the metals and therefore has a long lifetime. Lost plastic balancing weights have less impact to the environment than lost lead weights. Preferably, the balancing weight is manufactured by injection molding.

In a preferred embodiment, the clip has a structure, preferably at least one hole for anchoring within the body material.

It is further preferred, if the balancing weight is made of a glass fiber or carbon fiber reinforced material.

According to another embodiment, a clip for attaching the balancing weight to a rim is integrated into the body and preferably comprises of plastic material, most preferably of the same plastic material as the body.

In a further embodiment, the balancing weight has at least one, preferably two holes for handling by an automatic handling system or by a robot.

In another embodiment, the balancing weight has a hollow section.

In a further embodiment, the balancing weight has a groove or a recess.

### Description of Drawings

In the following, the invention will be described by way of example, without limitation of the general inventive concept, on examples of embodiment and with reference to the drawings.
- Figure 1: a balancing weight according to a preferred embodiment.
- Figure 2: shows a sectional view of a preferred embodiment.
- Figure 3: shows a first embodiment of a clip.
- Figure 4: shows a second embodiment of a clip.
- Figure 5: shows an embodiment with integrated clip.
- Figure 6: shows another preferred embodiment with further reduced weight.
- Figure 7: shows a further reduced weight embodiment.
- Figure 8: shows another embodiment of a balancing weight.
- Figure 9: shows a further embodiment with a hollow section.
- Figure 10: shows a further embodiment with a recess.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

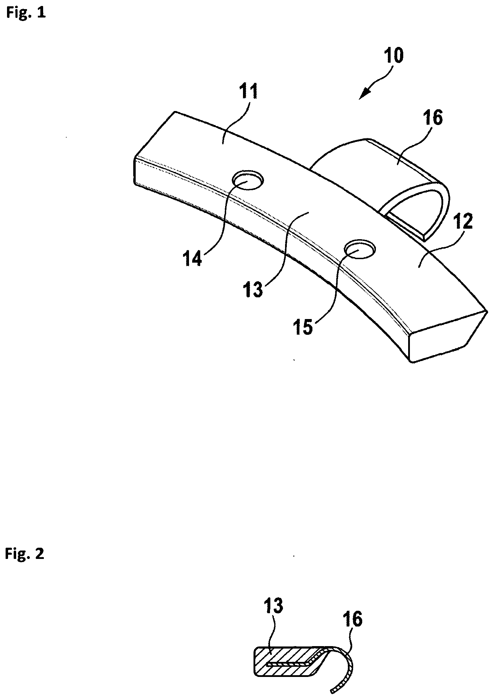

Figure 1 shows a balancing weight 10 of a preferred embodiment. The body of the balancing weight comprises a center section 13 and preferably a first side wing 11 and a second side wing 12 to the sides of the center section. The material of the body is preferably a plastic material, which may be fiber reinforced, or any other lightweight material. It does not include a mass portion or any mass particles for increasing the weight. A clip 16 is provided preferably at the center section 13 for attaching the weight to a rim of a wheel. Accordingly, the clip is protruding from the center section. Furthermore, at least one hole 14, 15 may be provided, preferably within at least one of the side wings to grip the balancing weight by an automatic handling system or robot. With iron or lead balancing weights having a weight of 5 or 10 g, the side wings are so short, that it is not possible to provide the holes 14, 15. A widely used standard distance between these holes is 24 mm. A typical 20 g balancing weight has a length of about 40 mm leaving sufficient space for the holes. A 10 g balancing weight, which may have about 20 mm of length, could no more bear such holes. Smaller balancing weights would even no more allow attaching a clip, which typically has a width of 16 mm. Therefore, a 5 g clip-on balancing weight cannot be realized. Due to the lower density of the plastic material, plastic balancing weights have a significant increased size over metal weights and therefore provide sufficient space for the holes and the clip. Therefore balancing weights having standard shape may be realized with low weights like 10 g or 5 g. The embodiment shown is a very simple embodiment, which can be manufactured easily by injection molding. The clip 16 may be a metal clip partially molded into the body.

Figure 2 shows a sectional view of the preferred embodiment. Here the clip 16 is held within the center section of the body.

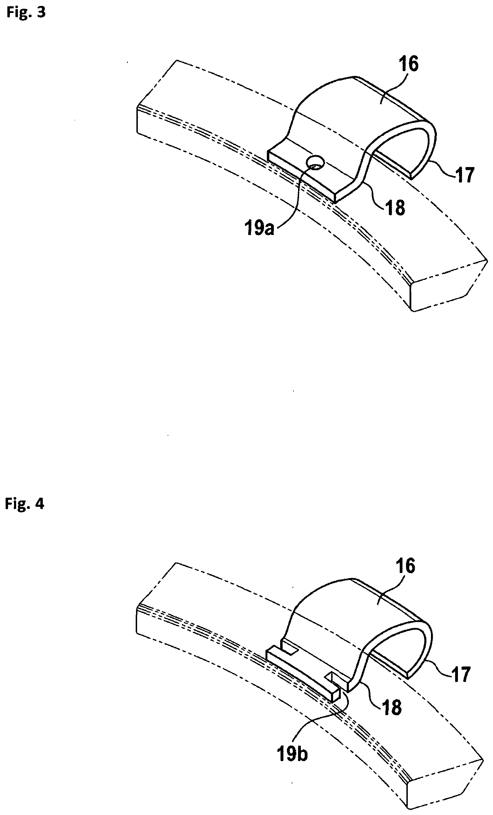

Figure 3 shows a clip, which is preferably made of metal sheet like aluminum, iron or steel. The clip has a rim section 17 for attachment to the rim of a wheel. It further has a body section 18, which is integrated into the body of the balancing weight. It is further preferred, if there is at least one means for increasing the stability and the extraction force, which may be a hole 19a. During molding of the body, the plastic material protrudes the hole and fixes the clip to the body.

Figure 4 shows a further embodiment of a clip. Here, instead of a hole, at least one cutout 19b may be provided. It may be combined with at least one hole as described above.

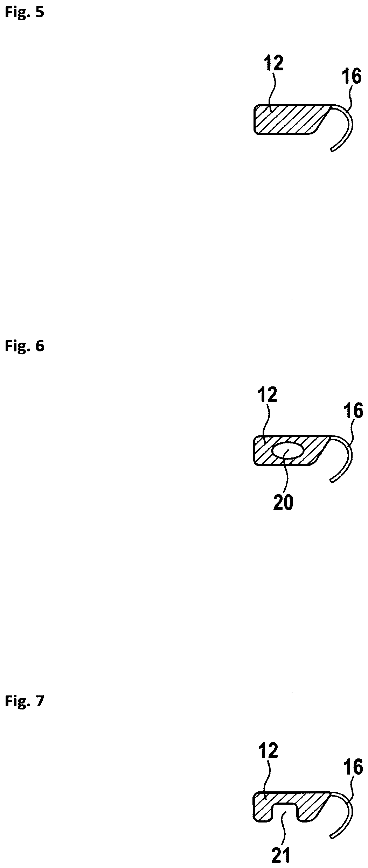

Figure 5 shows another embodiment with an integrated clip in a sectional view. Here, clip 16 is an integral part of the body. It preferably comprises the same plastic material as the body. It is preferred, if at least the section of the clip 16 is fiber reinforced, for example by glass fibers or carbon fibers to increase its strength.

Figure 6 shows another preferred embodiment with further reduced weight. The average density of the balancing weight may further be decreased by a hollow space 20, preferably within the sides of wings. It is preferred if the hollow space does not communicate with the holes 14, 15 and is totally enclosed in the plastic material. This embodiment allows to further increase the size of the balancing weights.

Figure 7 shows another reduced weight embodiment. Here a groove or a recess 21 is preferably provided in at least one of the side wings 11, 12. This groove may communicate with at least one of the holes 14, 15. The groove may be closed to the sidewalls of the side wings, so they cannot be seen from the outside, when the balancing weight is attached to a rim.

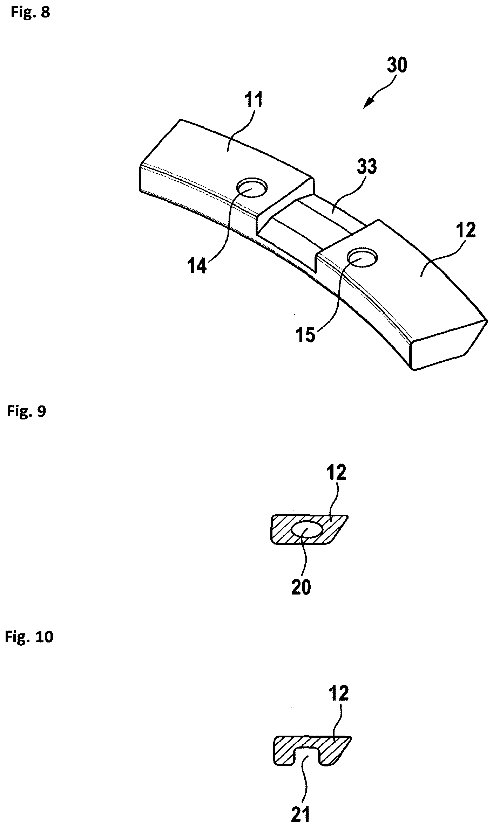

Figure 8 shows a balancing weight without clip. Its center section has a shape for holding a separate clip, which preferably is a metal clip for attaching the balancing weight to the rim of the wheel. This embodiment may have the same features as described above, except the clip.

Figures 9 and 10 show further embodiments with a hollow space and a groove as described above.

### List of reference numerals

- 10: balancing weight
- 11: first side wing.
- 12: second side wing
- 13: center section
- 14: first hole
- 15: second hole
- 16: clip
- 17: rim section
- 18: body section
- 19a: hole
- 19b: cutout
- 20: hollow space
- 21: recess
- 30: balancing weight without clip
- 33: center section

## Claims

1. Balancing weight (10) having a center section (13) and two side wings (11, 12) comprising
a plastic material without integrated mass portion or mass particles, and
a clip for attaching the balancing weight to a rim of a wheel, the clip has a rim section (17) for attachment to the rim of a wheel and a body section (18) which is integrated into the body of the balancing weight.
**characterized in, that**
the body section (18) of the clip is integrated into the plastic material.

2. Balancing weight according to claim 1,
**characterized in, that**
the clip is made from metal sheet.

3. Balancing weight according to claim 1,
**characterized in, that**
the clip is made from plastic material.

4. Balancing weight according to claim 3,
**characterized in, that**
the clip is an integral part of the center section (13).

5. Balancing weight according to any one of the previous claims,
**characterized in, that**
the clip has at least one hole (19a) or cut out (19b) to increase the pullout force.

6. Balancing weight according to any one of the previous claims,
**characterized in, that**
a hollow space (20) is provided in the balancing weight.

7. Balancing weight according to any one of the previous claims,
**characterized in, that**
said hollow space (20) is provided in at least one of the side wings.

8. Balancing weight according to any one of the previous claims,
**characterized in, that**
a groove or recess (21) is provided in the balancing weight.

9. Balancing weight according to any one of the previous claims,
**characterized in, that**
said groove or recess (21) is provided in at least one of the side wings.

10. Balancing weight according to any one of the previous claims,
**characterized in, that**
wherein the material of the balancing weight is at least partially fiber reinforced.

11. Balancing weight according to any one of the previous claims,
**characterized in, that**
wherein at least one hole (14, 15) for handling the balancing weight by an automatic handling system or robot is provided.

## Patentansprüche

1. Auswuchtgewicht (10) mit einem Mittelabschnitt (13) und zwei Seitenflügeln (11, 12) umfassend
ein Kunststoffmaterial ohne integrierten Masseanteil oder Masseteilchen, und
einen Clip zum Befestigen des Auswuchtgewichts an einer Felge eines Rades, wobei der Clip einen Felgenabschnitt (17) zur Befestigung an der Felge eines Rades und einen in den Körper des Auswuchtgewichtes integrierten Körperabschnitt (18) hat,
**dadurch gekennzeichnet, dass**
der Körperabschnitt (18) des Clips in das Plastikmaterial integriert ist.

2. Auswuchtgewicht nach Anspruch 1,
**dadurch gekennzeichnet, dass**
der Clip aus Metallblech besteht.

3. Auswuchtgewicht nach Anspruch 1,
**dadurch gekennzeichnet, dass**
der Clip aus Kunststoff besteht.

4. Auswuchtgewicht nach Anspruch 3,
**dadurch gekennzeichnet, dass**
der Clip ein integraler Teil des Mittelabschnitts (13) ist.

5. Auswuchtgewicht nach einem der vorhergehenden Ansprüche,
**dadurch gekennzeichnet, dass**
der Clip zumindest ein Loch (19a) oder einen Ausschnitt (19b) hat, um die Auszugskraft zu erhöhen.

6. Auswuchtgewicht nach einem der vorhergehenden Ansprüche,
**dadurch gekennzeichnet, dass**
ein Hohlraum (20) in dem Auswuchtgewicht vorgesehen ist.

7. Auswuchtgewicht nach einem der vorhergehenden Ansprüche,
**dadurch gekennzeichnet, dass**
der Hohlraum (20) in zumindest einem der Seitenflügel vorgesehen ist.

8. Auswuchtgewicht nach einem der vorhergehenden Ansprüche,
**dadurch gekennzeichnet, dass**
eine Nut oder Aussparung (21) in dem Auswuchtgewicht vorgesehen ist.

9. Auswuchtgewicht nach einem der vorhergehenden Ansprüche,
**dadurch gekennzeichnet, dass**
die Nut oder Aussparung (21) in zumindest einem der Seitenflügel vorgesehen ist.

10. Auswuchtgewicht nach einem der vorhergehenden Ansprüche,
**dadurch gekennzeichnet, dass**
das Material des Auswuchtgewichts zumindest teilweise faserverstärkt ist.

11. Auswuchtgewicht nach einem der vorhergehenden Ansprüche,
**dadurch gekennzeichnet, dass**
zumindest ein Loch (14, 15) zur Handhabung des Auswuchtgewichts durch ein automatisches Handhabungssystem oder einen Roboter vorgesehen ist.

## Revendications

1. Masse d'équilibrage (10) possédant une partie centrale (13) et deux ailes latérales (11, 12) et comprenant
une matière plastique sans bloc ou particules de lest intégrées, et
une agrafe pour fixer la masse d'équilibrage à une jante d'une roue, laquelle agrafe
possède une partie de jante (17) pour se fixer à la jante d'une roue et une partie de corps (18) intégrée dans le corps de la masse d'équilibrage,
**caractérisée en ce que** la partie de corps (18) de l'agrafe est intégrée dans la matière plastique.

2. Masse d'équilibrage selon la revendication 1, **caractérisée en ce que** l'agrafe est faite de tôle.

3. Masse d'équilibrage selon la revendication 1, **caractérisée en ce que** l'agrafe est faite de matière plastique.

4. Masse d'équilibrage selon la revendication 3, **caractérisée en ce que** l'agrafe fait partie intégrante de la partie centrale (13).

5. Masse d'équilibrage selon l'une quelconque des revendications précédentes, **caractérisée en ce que** l'agrafe possède au moins un trou (19a) ou une découpe (19b) afin d'augmenter la force d'arrachement.

6. Masse d'équilibrage selon l'une quelconque des revendications précédentes, **caractérisée en ce qu'**un espace creux (20) est prévu dans la masse d'équilibrage.

7. Masse d'équilibrage selon l'une quelconque des revendications précédentes, **caractérisée en ce que** ledit espace creux (20) est prévu dans au moins une des ailes latérales.

8. Masse d'équilibrage selon l'une quelconque des revendications précédentes, **caractérisée en ce qu'**une rainure ou un renfoncement (21) est prévu dans la masse d'équilibrage.

9. Masse d'équilibrage selon l'une quelconque des revendications précédentes, **caractérisée en ce que** ladite rainure ou ledit renfoncement (21) est prévu dans au moins une des ailes latérales.

10. Masse d'équilibrage selon l'une quelconque des revendications précédentes, **caractérisée en ce que** le matériau de la masse d'équilibrage est au moins en partie renforcé par des fibres.

11. Masse d'équilibrage selon l'une quelconque des revendications précédentes, **caractérisée en ce qu'**au moins un trou (14, 15) est prévu pour la manipulation de la masse d'équilibrage par un système de manipulation automatique ou un robot.
